## Europäisches Patentamt
## European Patent Office
## Office européen des brevets

(19)

(11) Publication number: **0 024 455**

**A1**

(12) # EUROPEAN PATENT APPLICATION

(21) Application number: **79301746.8**

(22) Date of filing: **24.08.79**

(51) Int. Cl.³: **A 01 G 9/14**
**A 01 G 9/16**

(43) Date of publication of application:
**11.03.81 Bulletin 81/10**

(84) Designated Contracting States:
**AT BE DE FR NL SE**

(71) Applicant: **Foster, Wilfred**
**9 Lynwood Drive**
**Mytchett Camberley, Surrey(GB)**

(72) Inventor: **Foster, Wilfred**
**9 Lynwood Drive**
**Mytchett Camberley, Surrey(GB)**

(74) Representative: **Williams, John Francis et al,**
**J.F. Williams & Co 34 Tavistock Street**
**London WC2E 7PB(GB)**

(54) **Improvements in greenhouses.**

(57) A greenhouse having a single-glazed structure in at least two sections (10, 11), at least one (11) of the sections being supported for lateral movement relative to the other section (10) or sections, whereby the two sections (10, 11) alternatively may be arranged one inside the other to give an at least partially double-glazed greenhouse or laterally adjacent one another to give a single glazed greenhouse of larger area, the sections having end walls (19) such that in the alternative configurations the greenhouse remains enclosed on all sides.

The larger area, single-glazed configuration is used in summer; the double glazed configuration in winter and spring. Preferably the movable section rolls on ground rails (15, 16) into and out of the fixed section (10).

EP 0 024 455 A1

Croydon Printing Company Ltd.

1
## Improvements in Greenhouses

This invention relates to improvements in greenhouse constructions.

In summer time, gardeners tend to use the maximum amount of greenhouse space available to them, since plants have grown to full size. There is ample heat from the sun, and indeed ventilators are often needed to reduce the temperature. In winter and spring, by contrast, there is too little sun, and what heat is trapped is lost again too quickly through the glass walls and roof. The space required is however usually smaller, since the plants are still small seedlings.

The invention aims to reconcile the two contrasting situations, and to provide a greenhouse which is easily adaptable to either winter or summer requirements.

Generally, telescopic buildings are already known, which provide a building which can be retracted for compactness or opened out to provide, for example, a large covered work area. A greenhouse has been proposed in a number of movable sections, but the arrangement was such that in one of its states, the greenhouse effect was deliberately abandoned and the greenhouse became open to the sky.

2

The invention, by contrast, proposes a greenhouse having a single-glazed structure in at least two sections, at least one of the sections being supported for lateral movement relative to the other section or sections, whereby the two sections alternatively may be arranged one inside the other to give an at least partially double-glazed greenhouse or laterally adjacent one another to give a single glazed greenhouse of larger area, the sections having end walls such that in the alternative configurations the greenhouse remains enclosed on all sides.

In a preferred form the one section rolls on rails on the ground into and out of the other section.

In order that the invention shall be clearly understood, an exemplary embodiment thereof will now be described with reference to the accompany drawing, which shows a greenhouse according to the invention in perspective and in a state halfway between its two configurations.

The greenhouse has an outer section 10 and an inner section 11, and rests on two base strips 12, 13. The latter may for example be concrete. The outer section 10 is of any desired conventional greenhouse shape, but has only one end wall. That end defined by the arched frame 14 is open. The section 10 is rigidly mounted on the base strips, which extend about twice the length of the section 10.

Also mounted on the base strips for virtually the full

3

length thereof are rails 15, 16, which run parallel with, and just inside, the side walls of the section 10. The rails may stand above the bases, or be let into their surfaces.

The inner section 11 has the same shape as the outer section 10, but is slightly smaller. It has a series of wheels or rollers 17 which run on the rails 15, 16. The end defined by the arched frame 18 is open, but the end 19 is closed, having an access door 20. Thus the space within both sections is continuous, and the inner section 11 can at will be moved into and out of the outer section 10.

When moved out, the frame 18 is brought to coincide with the frame 14. A greenhouse is created which is single glazed throughout and has a ground area which is the sum of the area of the two sections.

When moved fully in, a greenhouse is created which is double glazed except for the two end walls, but has the ground area of one section only. Nevertheless, in winter when the double-glazed condition is required, the requirement for space is not usually so great. The double glazing can, if desired be completed on the end walls in addition. In particular, if the inner section is provided with an end wall with a door within a frame 18, this would automatically provide double glazing at that end. It will also form a divided greenhouse when the inner section is moved out.

4

Both sections may be glazed with glass, or the sections may be simple frames supporting transparent plastic sheeting. In either case, suitable provision may be made for anchoring the whole greenhouse to the ground. This may include pockets or projections to accept soil or water as a weight.

Various modifications of the above are possible.

It will be appreciated that either the outer section, or the inner section, or indeed both sections may be movable, and may consist of more than one piece movable separately. For instance, either of the sections may be split and the resultant pieces made to move in opposite directions.

Two advantages of this method would be that:-

1)      A shorter length of track or rail would project from each end.

2)      The weight to be moved at any one time would be shared between the sections.

Further, since double glazing as normally accepted, increases the temperature-retaining efficiency of a structure, then it follows that efficiency is increased by the addition of further layers.

Therefore, any number of sections may be made to separate or amalgumate so as to achieve, for example, triple glazing, or any practical combination of insulating layers.

It will be appreciated that if the inner structure is fixed, an advantage gained is that any accessories fixed to

5

its inner surfaces or any objects within its area need not be disturbed when the outer section is moved.

If the outer section is fixed and the inner section made movable, as described above an advantage gained is that extra cross-bracing can be provided within the movable section to further strengthen the structure against stresses and strains during movement.

Another method of moving the sections in relation to each other is to use the roof-ridge or the eves-ridges as supports or guides, in which case a cantilever beam may be required projecting from one end.

In the case of ground track or rail being used, it may be folded or hinged up against the end of the structure when in the closed position, and can be used as a locking device to lock the combined sections together as a form of compressive sealing.

In any event, provision is made for locking the sections in both the open and closed positions, and in intermediate positions should a partial double glazed condition/be desired. The locking could be by means of clamps, or nuts and bolts or by magnetic-strip material of the type commonly used to secure and seal the doors of refrigerators.

Sealing against draughts is provided by means of draught excluder strips around the joints and rails, for example by means of flat or recessed flanges, or by compression sponge

6.

rubber or plastics material. Sealing means is particularly required on the frames 14, 18 and around the end 19. The bottom edges of the movable section can be sealed by a depending flat rubber or neoprene strip.

The track or rail on which the structures move, is kept free from obstruction and foreign matter by means of a wiper which clears the track when the structures are moved.

## C L A I M S

1.     A greenhouse having a single-glazed structure in at least two sections, at least one of the sections being supported for lateral movement relative to the other section or sections, whereby the two sections alternatively may be arranged one  inside the other to give an at least partially double-glazed greenhouse or laterally adjacent one another to give a single glazed greenhouse of larger area, the sections having end walls such that in the alternative configurations the greenhouse remains enclosed on all sides.

2.     A greenhouse as in claim 1 wherein said at least one section can be rolled between its alternative positions.

3.     A greenhouse as in claim 2 having a rail or rails upon which said at least one section can be rolled.

4.     A greenhouse as in claim 3, wherein said rail or rails are at the level of the bottoms of the sections.

5.     A greenhouse as in claim 3 wherein said rail or rails are at the level of the roofs of the sections.

6.     A greenhouse as in any preceding claim wherein said at least one section rolls inside the other section or sections.

7.     A greenhouse as in any preceding claim wherein the sections are of arched shape and the movement is in the direction through the arches.

-2-

8.     A greenhouse as in any preceding claim wherein two
sections are provided and each has only one end wall.

9.     A greenhouse according to any preceding claim wherein
seals are provided around appropriate edges to reduce
draughts in either position of the movable section.

| European Patent Office | EUROPEAN SEARCH REPORT | Application number |
|---|---|---|
| | | EP 79 30 1746 |

| | DOCUMENTS CONSIDERED TO·BE RELEVANT | | CLASSIFICATION OF THE APPLICATION (Int. Cl.3) |
|---|---|---|---|
| Category | Citation of document with indication, where appropriate, of relevant passages | Relevant to claim | |
| | DE - C - 534 416 (N.V. WINDEKNECHT & CO.)<br><br>-- | 1-4 | A 01 G 9/14<br>A 01 G 9/16 |
| | DE - B - 1 286 799 (W. STRASSER)<br>* column 3, lines 3 to 6; fig. 2 *<br><br>-- | 1-4 | |
| | DE - C - 885 927 (K.-H. NOWAK)<br>* fig. 3 *<br><br>-- | 5 | |
| A | DE - B - 1 123 458 (H. MARSMANN)<br><br>-- | | TECHNICAL FIELDS SEARCHED (Int.Cl.3) |
| A | GB - A - 1 109 977 (R. GRANT)<br><br>---- | | A 01 G 9/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

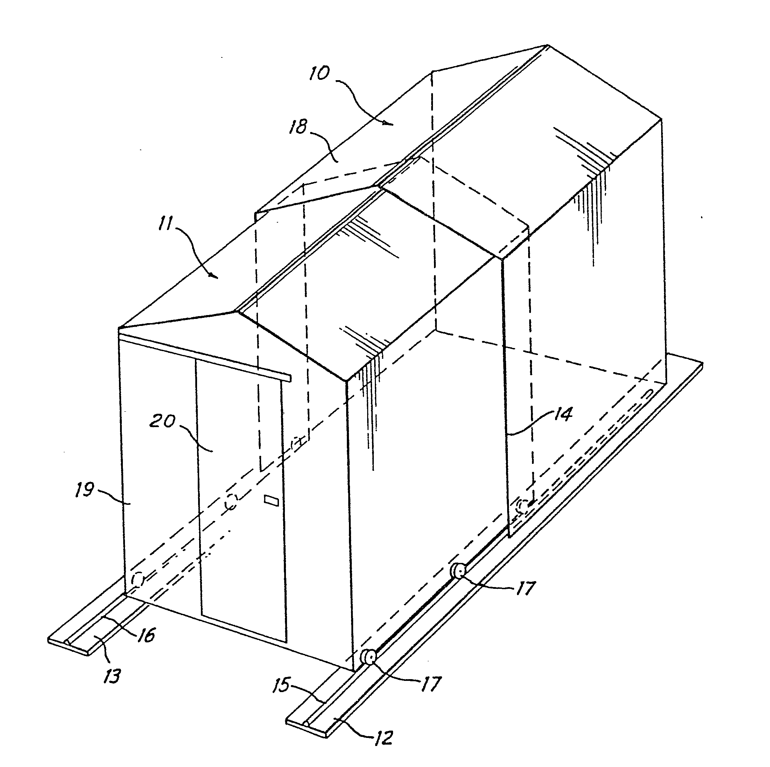

| | | |
|---|---|---|
| X | The present search report has been drawn up for all claims | |
| Place of search<br>Berlin | Date of completion of the search<br>16-04-1980 | Examiner<br>BITTNER |

EPO Form 1503.1  06.78